# EUROPÄISCHE PATENTANMELDUNG

(11) **EP 1 498 328 A1**
(43) Veröffentlichungstag der Anmeldung: **19.01.2005**
(21) Anmeldenummer: 03102173.6
(22) Anmeldetag: 15.07.2003
(51) Int. Cl.: B60R 22/48

(54) **Sicherheitsgurt-Warnvorrichtung**

(71) Anmelder: IEE International Electronics & Engineering S.A.R.L., 2632 Luxembourg (LU)
(72) Erfinder: Becker, Guido, 66679 Losheim am See (DE); Mousel, Thierry, 5637 Mondorf (LU); Schockmel, Paul, 8216 Mamer (LU)
(74) Vertreter: Beissel, Jean

(57) **Zusammenfassung**

Eine Sicherheitsgurt-Warnvorrichtung umfasst eine Vorrichtung zum Erfassen einer Belegung eines Sitzes durch einen Passagier, eine Vorrichtung zum Erfassen eines Anlegezustands eines dem Sitz zugeordneten Sicherheitsgurt, und eine Vorrichtung zur Ausgabe eines Warnsignals. Erfindungsgemäß umfasst die Vorrichtung zum Erfassen einer Belegung des Sitzes durch einen Passagier ein optisches bildgebendes System mit einer Bildauswerteeinheit.

## Beschreibung

### Einleitung

Die vorliegende Erfindung betrifft eine Sicherheitsvorrichtung für ein Fahrzeug und insbesondere eine Sicherheitsgurt-Warnvorrichtung.

Es ist allseits bekannt, dass das Tragen des Sicherheitsgurtes die Sicherheit von Fahrzeugpassagieren erheblich erhöht und die Folgen eines Unfalls deutlich verringern kann. Allerdings werden vorhandene Sicherheitsgurte häufig, bewusst oder unbewusst, nicht vorschriftsmäßig angelegt. Dies ist insbesondere auf den Rücksitzen des Fahrzeugs der Fall.

Um die Insassen eines Fahrzeugs zum Anlegen der vorhandenen Sicherheitsgurte zu bewegen ist man folglich dazu übergegangen, Fahrzeuge mit Warnsystemen auszustatten, die bei nicht angelegtem Sicherheitsgurt ein Warnsignal an den jeweiligen Passagier und/oder den Fahrer ausgeben. Die Warnsignale sollen bei solchen Warnvorrichtungen selbstverständlich nur dann ausgegeben werden, wenn die jeweiligen Sitze durch einen Passagier belegt sind. Demzufolge muss eine solche Sicherheitsgurt-Warnvorrichtung einerseits eine Vorrichtung zum Ermitteln des Belegungszustands des Sitzes und andererseits eine Vorrichtung zum Erkennen eines Anlegezustands des zugeordneten Sicherheitsgurts aufweisen.

Das US Patent US 6,239,695 B1 beschreibt beispielsweise ein Sicherheitsgurt-Warnsystem mit jeweils einem Sitzbelegungssensor und einem Gurtschloss-Sensor. Der Sitzbelegungssensor umfasst einen druckempfindlichen Folienschalter, der in einer Sitzfläche des zu überwachenden Sitzes derart angeordnet ist, dass der druckempfindliche Folienschalter ausgelöst wird, wenn der Sitz belegt ist. Der Gurtschloss-Sensor weist einen in dem Gurtschloss angeordneten Schalter auf, der beim Einführen der Gurtschnalle in das Gurtschloss geschaltet wird.

Der Nachteil einer solchen Vorrichtung liegt in der verhältnismäßig aufwendigen Verkabelung der Sitzbelegungssensoren. Diese notwendige Verkabelung der in den Sitz integrierten Sensoren stellt insbesondere bei variablen Rücksitzkonfigurationen mit herausnehmbaren Sitzen ein Problem dar.

### Aufgabe der Erfindung

Aufgabe der vorliegenden Erfindung ist es folglich, eine verbesserte Sicherheitsgurt-Warnvorrichtung vorzuschlagen.

### Allgemeine Beschreibung der Erfindung

Diese Aufgabe wird durch eine Sicherheitsgurt-Warnvorrichtung nach Anspruch 1 gelöst. Eine solche Sicherheitsgurt-Warnvorrichtung umfasst eine Vorrichtung zum Erfassen einer Belegung eines Sitzes durch einen Passagier, eine Vorrichtung zum Erfassen eines Anlegezustands eines dem Sitz zugeordneten Sicherheitsgurt, und eine Vorrichtung zur Ausgabe eines Warnsignals. Erfindungsgemäß umfasst die Vorrichtung zum Erfassen einer Belegung des Sitzes durch einen Passagier ein optisches bildgebendes System mit einer Bildauswerteeinheit.

Im Gegensatz zu den aus dem Stand der Technik bekannten Sitzbelegungssensoren wird das optische bildgebende System der vorgeschlagenen Warnvorrichtung nicht in die zu überwachenden Fahrzeugsitze integriert. Somit stellt sich bei der vorgeschlagenen Warnvorrichtung das Problem der Verkabelung beim Ein- bzw. Ausbau eines Sitzes nicht mehr. Die Anordnung der Warnvorrichtung steht demzufolge einem modularen Aufbau beispielsweise einer Rücksitzanordnung in einem Fahrzeug nicht entgegen.

Das optische System kann im Inneren des Fahrzeugs an einer beliebigen Stelle derart integriert werden, dass der oder die zu überwachenden Sitze in dem Blickfeld des Systems liegen. Dabei ist anzumerken, dass mit einem einzigen optischen System bei geeigneter Ausgestaltung der Optikkomponenten mehrere Sitze durch ein einziges bildgebendes System erfasst werden können. Hierdurch ergibt sich gegenüber dem Stand der Technik, bei dem jeder Einzelsitz bzw. jeder einzelne Sitzbereich einer Rücksitzbank mit einem eigenen Sitzbelegungssensor ausgestattet werden muss, bei der vorgeschlagenen Warnvorrichtung ein wirtschaftlicher Vorteil.

In einer einfachen Ausgestaltung der Erfindung kann das optische System beispielsweise in dem Fahrzeughimmel integriert sein. Mit einem derart angeordneten optischen System lässt sich beispielsweise der gesamte hintere Bereich des Fahrzeugs gut erfassen, so dass eine zuverlässige Sitzbelegungserkennung für sämtliche hinteren Plätze des Fahrzeugs erfolgen kann. Es ist anzumerken, dass mit dem vorgeschlagenen System auch eine Sitzbelegung zwischen den eigentlichen Sitzplätzen erkannt werden kann.

Ein weiterer Vorteil des vorgeschlagenen Systems gegenüber dem Stand der Technik liegt darin, dass durch eine geeignete Bildauswertung eine Unterscheidung zwischen einem Objekt und einer Person erfolgen kann. Dies ermöglicht eine Klassifizierung der Sitzbelegung und demzufolge eine situationsabhängige Ausgabe eines Warnsignals nur dann, wenn der Sitz tatsächlich durch eine Person belegt ist. Eine Ausgabe eines Warnsignals im Fall einer Sitzbelegung durch einen Gegenstand kann hierdurch wirksam vermieden werden.

Es ist anzumerken, dass die Bildauswerteeinheit in der optischen Einheit integriert sein kann oder mit dieser über eine Schnittstelle verbunden sein. Im letzteren Fall ist der Raumbedarf des optischen Systems reduziert so dass eine Integration in das Fahrzeug vereinfacht wird. Die Auswerteeinheit selbst kann dann an einer beliebigen Stelle im Fahrzeug untergebracht werden.

Die Bildauswerteeinheit und die Vorrichtung zum Erfassen eines Anlegezustands eines dem Sitz zugeordneten Sicherheitsgurt sind mit einer Steuereinheit verbunden, die bei einer tatsächlichen Sitzbelegung und bei nicht angelegtem Sicherheitsgurt die Vorrichtung zur Ausgabe eines Warnsignals ansteuert um ein optisches und/oder akustisches Warnsignal an den Fahrer und/oder den betreffenden Passagier auszugeben.

In einer vorteilhaften Ausgestaltung der Erfindung wertet die Bildauswerteeinheit ein von dem bilgebenden System aufgenommenes Situationsbild anhand der darin enthaltenen Konturen und/oder Kanten aus. Die Kantenermittlung kann durch Standardbildbearbeitungsverfahren erfolgen. Anhand der ermittelten Kanten ist eine Unterscheidung zwischen verschiedenen Sitzbelegungszuständen leicht zu bewerkstelligen. Darüber hinaus ermöglicht die Lage der ermittelten Kanten bzw. Konturen im überwachten Raum eine Bestimmung der Position eines Passagiers beispielsweise bezüglich eines Gurt-Schlosses. Der Vorteil der Reduzierung des Bildinhalts auf die vorhandenen Kanten bzw. Konturen liegt in der Reduzierung der zu bearbeitenden Datenmenge.

In einer bevorzugten Ausgestaltung weist das bildgebende System eine CMOS Kamera und/oder eine CCD Kamera auf. Diese Systeme zeichnen sich durch eine gute Auflösung bei gleichzeitig geringen Anschaffungskosten aus.

Die Vorrichtung zum Erfassen des Anlegezustands des Sicherheitsgurts kann beispielsweise einen Gurtschlosssensor umfassen. Eine Ausgestaltung eines solchen Sensors ist aus dem oben angeführten Stand der Technik bekannt. Es handelt sich beispielsweise um einen in das Gurtschloss integrierten Schalter, der beim Einführen der Sicherheitsgurtlasche in das Gurtschloss aktiviert wird.

In einer besonders bevorzugten Ausgestaltung der Erfindung wird die Vorrichtung zum Erfassen des Anlegezustands des Sicherheitsgurts jedoch durch das optische bildgebende System ausgebildet. In der Tat ist es bei genügend guter Auflösung des optischen Systems möglich, die Lage eines Sicherheitsgurts optisch zu bestimmen und demzufolge festzustellen, ob der Gurt angelegt ist oder nicht. Eine solche Ausgestaltung der Erfindung kann demnach auf eigenständige Gurtsensoren verzichten. Hierdurch reduziert sich einerseits die Zahl der Einzelkomponenten des Systems, andererseits wird der Einbau des Systems in ein Fahrzeug wesentlich vereinfacht.

Um eine optische Einkennung der Lage des Sicherheitsgurtes zu vereinfachen, kann der Gurt gegebenenfalls eine oder mehrere von dem optischen System erkennbare Markierungen aufweisen.

Es ist anzumerken, dass die vorgeschlagene Vorrichtung je nach Empfindlichkeit des optischen Systems mit einer Beleuchtungsvorrichtung ausgestattet sein kann, die es erlaubt, den zu überwachenden Raum bei ungenügender Umgebungslichtstärke geeignet auszuleuchten. Die Beleuchtungseinheit kann dabei vorzugsweise in einem für den Passagier nicht sichtbaren Bereich erfolgen, z.B. im IR Bereich.

Zusammenfassend ist festzuhalten, dass die vorgeschlagene Warnvorrichtung eine sehr genaue Klassifizierung der Sitzbelegung der überwachten Sitze ermöglicht und somit ein situationsabhängiges Warnsignal nur dann ausgibt, falls die momentane Belegungssituation ein Anlegen des Sicherheitsgurtes tatsächlich erfordert. Die erfolgte Klassifizierung der Sitzbelegung kann dabei auch zur Steuerung weiterer Anwendungen benutzt werden. So können beispielsweise elektrische Kopfstützen automatisch eingefahren werden, wenn die Fondssitze eines Fahrzeugs nicht belegt sind. Ebenso können Kopfstützen bei einer erkannten Belegung durch eine Person auf eine für die Statur des Passagiers geeignete Höhe eingestellt werden.

Die Daten bezüglich der Sitzbelegung können auch in Notfallsystemen verwendet werden, um beispielsweise bei einem Unfall automatisch die Zahl der in dem Fahrzeug befindlichen Passagiere an eine Notfallzentrale zu melden. Außerdem können die Daten in einem Fahrzeugdatenschreiber gespeichert werden, um bei einer späteren Unfallauswertung verwendet zu werden.

Es ist anzumerken, dass bei einer solchen Speicherung der Sitzbelegungsdaten die Speicherung lediglich der Kanteninformationen einerseits den Vorteil aufweist. Andererseits ist bei der Speicherung der Kanteninformationen eine Identifizierung der in dem Fahrzeug befindlichen Passagiere nicht möglich, so dass eventuelle Datenschutzbestimmungen eingehalten werden können.

Im folgenden wird eine mögliche Anordnung des optischen Systems der vorliegenden Erfindung innerhalb eines Fahrzeugs anhand der beiliegenden Figuren kurz beschrieben. Es zeigen:
- Fig.1:: eine Seitenansicht eines Fahrzeugs mit einer Sicherheitsgurt-Warnvorrichtung
- Fig.2:: eine Draufsicht auf das Fahrzeug der Fig.1.

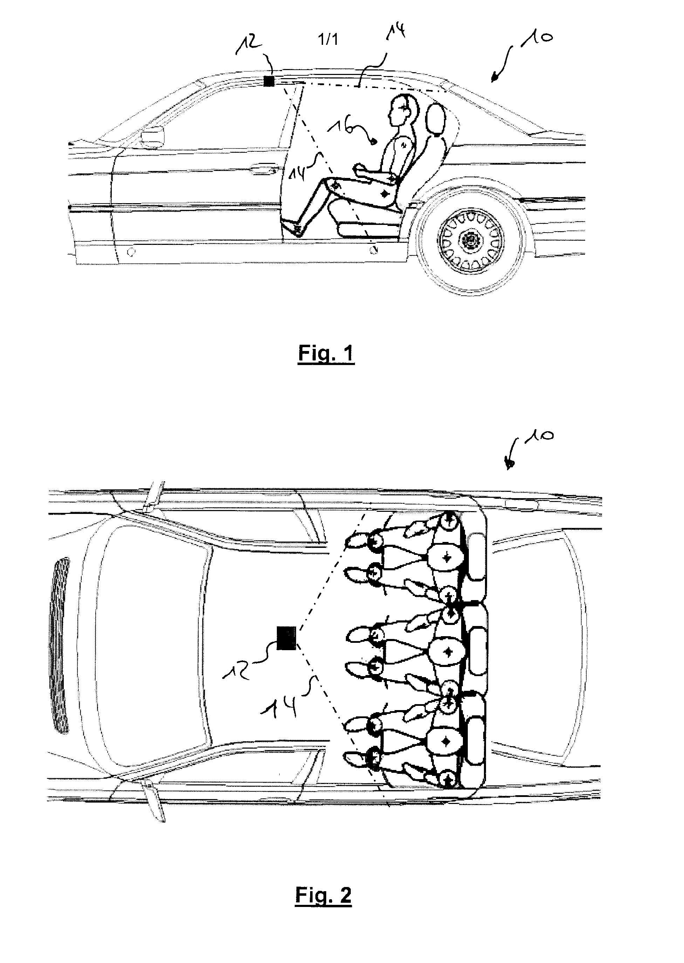

Die Fig. 1 zeigt eine Seitenansicht eines Fahrzeugs 10 mit einem in dem Fahrzeughimmel angeordneten optischen System 12. Das optische System, beispielsweise eine CCD-Kamera oder eine CMOS-Kamera ist derart in dem Fahrzeug angeordnet, dass das Sichtfeld der Kamera (durch die gestrichelten Linien 14 angedeutet) den gesamten Rücksitzbereich des Fahrzeugs überdeckt. Ein in dem Rücksitz einsitzende Person 16 wird demnach von der Kamera 12 erfasst und kann von einer nicht dargestellten Bildauswerteeinheit in den von der Kamera aufgenommenen Situationsbildern erkannt werden. Wird darüber hinaus erkannt, dass die Person den Sicherheitsgurt nicht angelegt hat, wird ein geeignetes Warnsignal ausgegeben.

In der Fig. 2 ist eine Draufsicht des Fahrzeugs 10 dargestellt. Man erkennt, dass durch eine entsprechende Ausgestaltung des optischen Systems der Sichtbereich 14 der Kamera 12 derart aufgeweitet ist, dass der gesamte Fondsbereich des Fahrzeugs durch eine einzige Kamera überwachbar ist.

## Patentansprüche

1. Sicherheitsgurt-Warnvorrichtung umfassend
eine Vorrichtung zum Erfassen einer Belegung eines Sitzes durch einen Passagier,
eine Vorrichtung zum Erfassen eines Anlegezustands eines dem Sitz zugeordneten Sicherheitsgurt, und
eine Vorrichtung zur Ausgabe eines Warnsignals,
**dadurch gekennzeichnet, dass** die Vorrichtung zum Erfassen einer Belegung des Sitzes durch einen Passagier ein optisches bildgebendes System mit einer Bildauswerteeinheit umfasst.

2. Sicherheitsgurt-Warnvorrichtung nach Anspruch 1, wobei die Bildauswerteeinheit ein von dem bildgebenden System aufgenommenes Situationsbild anhand der darin enthaltenen Konturen und/oder Kanten auswertet.

3. Sicherheitsgurt-Warnvorrichtung nach einem der Ansprüche 1 oder 2, wobei das bildgebende System eine CMOS Kamera und/oder eine CCD Kamera umfasst.

4. Sicherheitsgurt-Warnvorrichtung nach einem der Ansprüche 1 bis 3, wobei die Vorrichtung zum Erfassen des Anlegezustands des Sicherheitsgurts einen Gurtschlosssensor umfasst

5. Sicherheitsgurt-Warnvorrichtung nach einem der Ansprüche 1 bis 3, wobei die Vorrichtung zum Erfassen des Anlegezustands des Sicherheitsgurts durch das optische bildgebende System ausgebildet wird.

6. Sicherheitsgurt-Warnvorrichtung nach Anspruch 5, wobei der Sicherheitsgurt eine oder mehrere von dem optischen System erkennbare Markierungen aufweist.

7. Sicherheitsgurt-Warnvorrichtung nach einem der Ansprüche 1 bis 6, wobei das optische bildgebende System eine Beleuchtungsvorrichtung zum Ausleuchten des zu überwachenden Raums umfasst.
